# EUROPEAN PATENT APPLICATION

(11) **EP 3 225 545 A1**
(43) Date of publication of application: **04.10.2017**
(21) Application number: 16163527.1
(22) Date of filing: 01.04.2016
(51) Int. Cl.: B64C 31/06

(54) **SAIL FOR A KITE, KITE AND METHOD FOR MANUFACTURING SAID SAIL**

(71) Applicant: Pure Action Sports Europe DE GmbH, 10961 Berlin (DE)
(72) Inventor: Stiewe, Peter, 2755-216 Murches (PT)
(74) Representative: Manzer, Anna Katharina

(57) **Abstract**

The invention is related to a sail (1) for a kite comprising a canopy (2) having a leading edge (3) and a trailing edge (4); a front chamber (6) extending along said leading edge (3); and an inflatable hose (7) disposed in said front chamber (6), wherein said hose (7) being inflated with a compressed fluid, preferably compressed air or compressed gas, so that said hose (7) in said front chamber (6) is forming a front tube (5) of said sail (1), wherein in said inflated state of said hose (7), said hose (7) being dimensionally stable for bringing said sail (1) in a negative dihedral form independent on a load condition of said sail (1) and wherein said hose (7) comprises a predefined curvature in its longitudinal alignment prior its disposal in said front chamber (6). The invention is further related to a kite (K) that uses the above-mentioned sail (1) and methods for manufacturing such sails (1).

## Description

### FIELD OF THE INVENTION

The invention is related to a sail for a kite, a kite and methods for manufacturing such a sail. The inventive sail is preferably used for kiting sport activities, such as kite-boarding, kite-surfing, kite-buggying and/or snow-kiting. Additionally, the inventive sail might be used for other kiting applications, too, such as the provision of a main sail and/or an auxiliary sail and/or an emergency spinnaker for sailing boats. Additionally, the inventive sail might be used for yet another kite application, such as a pulling kite to provide supplemental pull forces for cargo ships.

The inventive sail is preferably used for power kites that enable a pull force for moving obstacles or humans.

The inventive sail is preferably suitable for leading edge inflatable kites, short LEI kites, also called "inflatables" or "tube kites".

### BACKGROUND OF THE INVENTION

A canopy of a nowadays sail for an LEI kite is typically made from a synthetic material. An inflatable tube might be used to span a front edge of the sail to form an airfoil of the kite sail. The tube is made from conical segmented polyester sections and an inner bladder to keep the air. The inflated tube normally defines the shape of the kite and - when used for water applications - keeps the kite floating once dropped in the water.

Flat LEI kites were developed with additional features including a concave trailing edge and a shallower arc in planform. These additional features allow the kite's angle of attack to be altered more and thus adjust the amount of power being generated to a much higher degree than previous kites. Such flat LEI kites can be fully depowered, which is a significant safety feature. They can also cover a wider wind range and have a quicker/director response to a rider's input if compared to other kite forms. An adjustable angle of attack and the inflated leading edge allows it to easily relaunch the kite. Thus, LEI kites are widely used nowadays.

If a LEI kite hits the water or ground too hard or is subjected to substantial wave activity, the inflated leading edge can burst or it can be torn apart. Repairing such LEI kites is difficult and expensive.

In the document DE 10 2013 218 375 A1 a sail for a kite is described. It comprises a canopy with a leading edge, a trailing edge and a front tube. The front tube is built by a bladder that is located in a front chamber. The chamber extends along the leading edge of the canopy to maintain an aerodynamically advantageous profile at the leading edge, even when the angle of attack changes. The front tube allows an easy exchange of the tube, especially when the tube is damaged. Thus, repairing costs are reduced enormously.

The leading edge of a LEI kite has a defined curvature to provide a stabilized form of the sail also under different load conditions. This form is a negative dihedral form. Nowadays, the definition of the leading edge curvature is achieved by an elaborated forming of the canopy material itself.

The tube system material is attached to the canopy material with additional seams. Such an integration of the tube system with the canopy raises several drawbacks.

Firstly, when the tube is inflated with compressed air or with a compressed gas under high pressure, the material that forms the tube body has to be very robust to withstand the high pressure forces of the compressed air or gas. A more robust tube material material leads to a higher weight of the kite and thus decreases the maneuver capabilities. Especially, the spanwise or lengthwise closing seam of the tube system is a pressure-limiting factor of the tube system. Sometimes, also the seam between the canopy and the tube system is a pressure-limiting factor of the tube system.

Secondly, for forming the leading edge with its desired curvatures, it is necessary to specifically form the leading edge of the canopy. For instance several trapezoid pieces are joined in an elaborated manner to provide the defined curvature of the leading edge. A specific forming of the canopy by such pieces further increases the manufacturing costs due to additional cutting and stitching process steps.

Thirdly, as a result of affixed front tubes, it is impossible to orient the front tube within the chamber in such a way that a uniform and aerodynamically advantageous profile is formed at the leading edge, regardless of an angle of attack. Thus, the known sail frequently result in a lower sail which flaps and which is instable, and which is generally formed by the bottom side of the chamber which extends from the leading edge toward the trailing edge.

Fourthly, each canopy size comprises its own tube system diameters. Thus no easy exchanging of a bladder from a higher sized canopy to a lower sized canopy or vice versa is possible. This decreases the flexibility and increases manufacturing costs, since canopy-size dependent tube systems are used.

There is a need to provide a sail for a kite that avoids all the above disadvantages and drawbacks.

Thus, an objective of the invention is to reduce the manufacturing costs of a kite and further increase form stability. Additionally, a flexible tube system replacement should be achieved.

### SUMMARY OF THE INVENTION

According to a first aspect of the invention a sail for a kite comprises a canopy that has a leading edge and a trailing edge. A front chamber extends along said leading edge. An inflatable hose is disposed in said front chamber, wherein said hose being inflated with a compressed fluid, so that said hose in said front chamber is forming a front tube of said sail. The compresses fluid preferably is compressed air or a compressed gas. In said inflated state of said hose, said hose being dimensionally stable for bringing said sail in a negative dihedral form independent on a load condition of said sail. Said hose comprises a predefined curvature in its longitudinal alignment prior its disposal in said front chamber.

The hose according to the invention is a flexible tube in a deflated state of said hose and it is dimensionally stable in its inflated state. Thus, in its inflated state of said hose, the leading edge of said canopy is mainly formed by the predefined curvature of the hose. So, the hose comprises a form in is inflated state that per se allows defining the curvature of the leading edge without further additional housing of the hose or using additional bridles. The hose differs very much from the conventionally used bladder, since a bladder in an inflated state is dimensionally instable because of the used materials. So a bladder does not provide a predefined curvature in its inflated state. If a tube system comprises a bladder only, it needs to provide additional measures to obtain the predefined curvature of the leading edge, e.g. by elaborated forming of the canopy at the leading edge.

Predefining the curvature of the hose or pre-curved hose hereinafter is referred to a substantially fixed radius value at which said hose is curving around. The term "curvature" is similar to the term "bending". The defined curvature is related to the hose in its inflated state. The hose is preferably a machine-made mass product and its predefined curvature comprises the same radius over a predefined section of said hose. Under specific load conditions additional bridles of the kite might be used to further adapt the curvature of said hose. The predefined curvature should at least be 80 percent of the resulting curvature under load conditions, wherein the remaining up to 20 percent might be adjusted by said bridles, the form of the canopy or another additional measure.

The compressed fluid is preferably compressed air or a high pressure gas. In fluid mechanics, compressibility is the measure of the relative volume change of a fluid as a response to a pressure change. The volume of the compressed air or gas might strictly be limited to the inner dimensions of the hose.

Preferably, said hose being inflated with a pressure of at least 15 pounds per square inch, more preferably more than 20 pounds per square inch. Thus, the hose is inflated with at least the doubled value of pressure than a tube system of a conventional kite. The higher amount of pressure in the hose leads to an enormous form stability of the leading edge without additional measures such as strong canopy materials that form the leading edge and additional strong seams.

The term "longitudinal alignment" is related to the "longitudinal extension" or "longitudinal direction" of said hose which is much more than its "cross extension" or "cross direction".

By predefining the curvature of the hose and arranging the hose inside said front chamber, a front tube is achieved if the hose is inflated with the high pressure gas or the compressed air.

Thus, forming of a leading edge front tube is now mainly achieved by said inflated hose that is arranged in said front chamber. Thus, the material of the canopy can be made of much lighter and also weaker material since this material does not form the leading edge anymore. As a conclusion, the manufacturing costs are enormously decreased since other canopy materials can now be used for the leading edge. Those other materials do not necessarily need to stand the high pressure of a dimensionally instable bladder. Also the seams now do not need to form the form of the leading edge of the canopy. Thus, the seams can be built with lighter and weaker material.

The canopy of the sail is preferably built by a flexible skin, preferably a synthetic material, to form an airfoil of the sail. The leading edge of the canopy is mainly formed by the predefined curvature of the hose and so a negative dihedral form is achieved irrespective of the load condition, e.g. a higher pulling force for moving an obstacle or a human if the canopy is arranged in a power zone of a wind window.

The front chamber might completely cover the hose, so that the surface of the hose is fully covered by the chamber material. To dispose said hose, additional chamber openings might be arranged at the extended endings of said front chamber.

Alternatively, the chamber might be segmented to build tensioning/retaining elements such as holding loops or holding strips for affixing the hose at the canopy. In this case, the front chamber would not cover the hose completely, which would save front chamber material and thus decrease manufacturing costs. Since the hose itself is built in a dimensionally stable manner, the sail would be in a negative dihedral form to provide proper sailing properties in all load conditions.

Using an above-mentioned inflatable pre-curved hose, it is now possible to manufacture kites with canopy-size-independent tube systems. This increases the flexibility of using one canopy with different hose-sizes. Additionally it allows the use of different canopy sizes with the same tube system.

In a preferred embodiment of the sail, a bladder is arranged in the hose, wherein both the hose and the bladder are disposed in said front chamber. The bladder provides an additional skin to the hose and thus increases the air-tightness that avoids air to escape from the inflated hose. Additionally, the robustness of the resulting tube is highly increased.

In another preferred embodiment of the sail, said sail comprising a tube system including said front tube and at least one strut extending between said leading edge and said trailing edge, wherein said at least one strut being built with a strut-hose disposed in a strut-chamber. The term "strut" herein refers to a transverse tube that is arranged between the leading edge and the trailing edge of the canopy to increase the stability of the form of the sail. The strut-hose is preferably formed linearly without a predefined curvature in its longitudinal extension. Preferably, the tube system comprises one front tube and three struts to form a negative dihedral form of the canopy.

An aerodynamic profile of the sail preferably results by tensioning the canopy over the front tube that is built by the front chamber and a disposed inflated hose and/or the at least one strut.

In another preferred embodiment, the predefined curvature of said hose comprising a curvature radius being up to 50 percent higher than a radius of said sail. This allows the canopy being tensioned if the hose is disposed in the front chamber.

In another preferred embodiment of the sail, said hose in said inflated state being circumferentially homogeneous, preferably comprising a diameter in the range of 60 Millimeter to 140 Millimeter, more preferably in the range of 80 Millimeter to 100 Millimeter. Thus, compared to conventional LEI kites, the diameter ranges of the leading edge is drastically reduced due to inventive inflatable hose disposed in said front chamber. This leads to reduced drag and thus a better efficiency as well as an improved handling of the kite is achieved.

In another preferred embodiment of the sail, the front chamber and/or the strutchamber(s) comprising at least one opening for exchanging said hose, preferably at at least one extended end of said front chamber. The openings might comprise appropriate closing means, e.g. by fastening via loops, straps, Velcro fasteners, snap fasteners, zippers or the like. Thus, the hose can be exchanged upon defect or the kite can be adapted with differently formed hoses to allow different use scenarios. The different forms of hoses might be an alternative curvature radius, an alternative curvature form, an alternative diameter in cross section and so on. This leads to an adaption of one single sail of a kite to very different scenarios, since the curvature and the diameter in cross section of the inventive hose is now adaptable to the rider's skills and/or to specific weather condition without the need of different canopies. Alternatively, the same hose can be used for differently sized kites and/or differently sized canopies to allow the adaption to different weather conditions and types of use as mentioned above. In either case, a more flexible sail for kiting is obtained.

According to one particularly preferred embodiment, said hose and/or said at least one strut-hose is/are connected at at least one or both of its/their opposite ends, viewed in the longitudinal extent, by means of a tensioning and/or retaining device for tensioning and/or retaining said hose in said front chamber and/or for tensioning and/or retaining said at least one strut-hose in the appropriate strut-chamber. The tensioning device is then preferably connected to the canopy. A simple tensioning mechanism may thus be provided which allows rapid and easy replacement of the respective hose from the respective chamber.

In a preferred embodiment, said strut being attached through a wall extending parallel to said strut, wherein an upper edge of said wall is fixed to the canopy of said sail and wherein a bottom edge of said wall carrying said strut-chamber.

The at least one or more strut is/are either detachably or non-detachably connected to the canopy. A non-detachable connection may be provided, for example, by sewing or gluing. A preferred detachable mounting of the strut may be provided, for example, by fastening via loops, straps, Velcro fasteners, snap fasteners, zipper or the like in order to provide the strut at appropriate areas and in an appropriate orientation on the canopy. Similarly as for the arrangement of the front tube, the at least one strut may comprise a freely movable strut-hose in the strut-chamber which preferably extends between the leading edge and the trailing edge.

According to one embodiment, the front chamber for accommodating the hose and the strut-chamber(s) for accommodating the strut-hose(s) may be connected to one another, or may also be present separate from one another. The chambers, viewed in their longitudinal extent, may have a closed cross section at least over a portion, or over all of their length.

Furthermore, the chambers may have at least one closable opening or may have a closable design overall in order to exchangeably insert said hose into the chambers through the opening in the front chamber or the strut-chamber. These openings are preferably provided at at least one or also at both ends of the appropriate chamber, viewed in the longitudinal extent of the chamber in question, so that the hose or the strut-hose(s) may be easily pushed in at corresponding ends of the chamber and selectively replaced.

In another preferred embodiment, the hose is disposed in an at least partly or completely moveable manner into the front chamber. As a result of the disposed inflatable hose in the front chamber, the canopy may be easily tensioned over the front tube. On account of the tension which is thus built up between the hose and the chamber, it is preferably made possible for an upper sail and a lower sail of the chamber to form an aerodynamically advantageous profile, in particular an aerodynamic droplet shape. Since the hose might be freely movable relative to the inner wall of the chamber and the hose is dimensionally stabile independent on a load condition of the sail, the aerodynamically advantageous (droplet) profile at the leading edge is continuously maintained, even when the angle of attack of the sail changes, so that the chamber maintains its advantageous profile as well as its dimensional stability, even for different angles of incidence. In this way, the sail may maintain a stable design, regardless of the angle of attack and the angle of incidence, thus in particular avoiding an unstable, flapping lower sail without using strong materials for the canopy. In turn, the turbulences which form in the suction area of the resulting front tube, i.e., on the bottom side of the front chamber, may thus be reduced, resulting in a reduction of the flow resistance and increased efficiency of the kite. This results in an increased travel speed, an increased flight altitude and flight duration during jumps, an improved upward motion when tacking into the wind, a larger wind range, and an increased throttling capability (depowering). It is thus advantageously made possible that the chamber for accommodating the hose forms an aerodynamic droplet-shaped profile which tapers from the leading edge toward the trailing edge, at least when the canopy is stretched out. Due to the preferred tensioning of the chamber and the inflated hose inside the chamber, an increased overall dimensional stability of the kite may be achieved.

In a preferred embodiment of said sail, said hose comprises at least two additional predefined curvatures, one of each being located at an end of said leading edge, wherein said additional predefined curvatures being directed in opposite direction to said predefined curvature. Thus, a swept kite shape, such as applicable to bow kites is achieved in which the wingtips of said canopy comprise a predefined curvature. This increases the flatness of the canopy of the sail and thus results in wider wind ranges compared to the conventional kites. So two major kite sizes, such as 7 square-meters and 12 square-meters could form an effective quiver for winds ranging from 10 knots to 30 knots or more for a 75 kilogram rider. This makes the kite more suitable for beginners and professionals at once.

In another preferred embodiment, said hose comprises at least three segments, also referred as hose pieces, wherein each segment of said hose comprises its own predefined curvature. The afore-mentioned hose with its predefined curvature is thus the middle hose segment, wherein at each end of this middle hose segment another hose segment is disposed. In one preferred embodiment, all hose segments are easily connected with a small bypass hose. Preferably, all hose segments are connected with a socked or a sleeve or a Velcro. In all cases, the different segments are inflated together. In another embodiment, each hose segment is inflated separately and does not comprise pressured fluid exchange with another hose segment.

According to a preferred embodiment, those hose segments are connected together by specific hose connectors. Thus, at each end of the middle hose segment, a hose connector is arranged to connect another hose segment having another predefined curvature. Using such a connecting mechanism, the hose segments can be attached to each other very easily and the segmented hose can be disposes in one front chamber.

Alternatively, each hose segment is disposed in a respective front chamber segment, also referred to as front chamber piece. Each chamber segment might house one hose segment completely or at least partly by providing holding loops or holding strips. Thus, no hose connectors are required and each hose segment can be exchanged quickly leaving the remaining hose segments in their respective chamber segments untouched.

In another preferred embodiment, said hose being inserted in said front chamber in a deflated state of said hose. This allows an easy removing of said hose if necessary.

In an alternative embodiment, the hose is inflated first and subsequently disposed in said front chamber. This increases the handling during the manufacturing process or the handling of the sail when changing said horse during kite sessions for different riders or different conditions.

In another preferred embodiment, said front chamber is integrally formed with said canopy. This saves manufacturing steps and avoids a waste of material.

In another preferred embodiment, said hose comprises a first surface and a second surface being arranged opposite to said first surface, wherein an amount of warp yarns of said first surface is different to an amount of warp yarns of said second surface for predefining said curvature. This implies that the hose is made from a woven material, such as a textile material or a synthetic material, e.g. polyester. To obtain a round shape of the diameter a circular weaving machine is preferably used. The number of warp yarn of each of the two surfaces of the hose might be different to obtain a high precision predefined curvature of the inflatable hose.

An adjustment of the predefined curvature of the hose is alternatively or additionally achieved by an adaption of the number of warp yarn for one of the surfaces and/or by using different warp yarn material for each surface.

In another preferred embodiment, the hose is preferably produced in a machine-made manner and is a mass product. This allows cheap production of the tube system for said sails and further reduces production costs. Using same hoses in different sails further decreases the costs of manufacturing and increase the flexibility for configuring the kite.

In another preferred embodiment, the hose is produced in a machine-made manner using an extrusion process. This allows cheap production of the tube system for said sails and further reduces production costs.

In another aspect of the invention a kite comprises a sail according to the above mentioned manner, wherein steering lines and front lines as bridles are used to control or steer the kite and wherein said steering lines and said front lines are removable connected to the sail. So, the kite can easily be configured and connected to a control bar.

In a third aspect of the present invention a method for manufacturing a sail according to the above mentioned manner is provided. The method comprising the following steps: Providing a canopy material for forming said sail; turning down said canopy material along a leading edge of an canopy of said sail for integrally forming a front chamber and disposing an inflatable hose in said front chamber, wherein said hose being inflated with compressed air or high pressure gas, so that said hose in said front chamber is forming a front tube of said sail; wherein in said inflated state of said hose, said hose being dimensionally stable for bringing said sail in a negative dihedral form independent on a load condition of said sail; and wherein said hose comprises a predefined curvature, wherein said hose being bent prior being disposed in said front chamber.

In a fourth aspect of the present invention another method for manufacturing a sail according to the above mentioned manner is provided. The method comprising the following steps: Providing a canopy material for forming said sail; separately providing a front chamber at a leading edge of said canopy; affixing said front chamber along said leading edge; and disposing an inflatable hose in said front chamber, wherein said hose being inflated with compressed air or high pressure gas, so that said hose in said front chamber is forming a front tube of said sail; wherein in said inflated state of said hose, said hose being dimensionally stable for bringing said sail in a negative dihedral form independent on a load condition of said sail; and wherein said hose comprises a predefined curvature, wherein said hose being bent prior being disposed in said front chamber.

According to an alternative embodiment, the hose is attached to the canopy material by retaining elements, such as holding rings or Velcro fasteners which are arranged in equidistant manner along the leading edge to provide proper retaining forces.

### BRIEF DESCRIPTION OF THE DRAWINGS

In the following exemplary embodiments of the invention are described with reference to drawings. Those exemplary embodiments do not limit the scope of the invention. The same reference signs in different drawings indicate the same elements or at least the same functions unless otherwise stated.
- Fig. 1: shows a perspective view of a kite having a sail according to the invention;
- Fig. 2: shows a cross section of a portion of the sail according to FIG. 1, viewed in the direction of longitudinal extent of a front chamber;
- Fig. 3: shows a cross section view of the hose arranged in a front chamber with different radiuses according to the invention;
- Fig. 4: shows another perspective view of a kite having a sail according to the invention;
- Fig. 5: shows another perspective view of a kite having a sail according to the invention;
- Fig. 6: shows another perspective view of a kite having a sail according to the invention;
- Fig. 7: shows a process flow diagram of a method for manufacturing a sail for a kite according to the invention;
- Fig. 8: shows a process flow diagram of another method for manufacturing a sail for a kite according to the invention;
- Fig. 9: shows an inflatable hose with predefined curvature according to the invention.

### DETAILED DESCRIPTION OF THE PREFERRED EMBODIMENTS

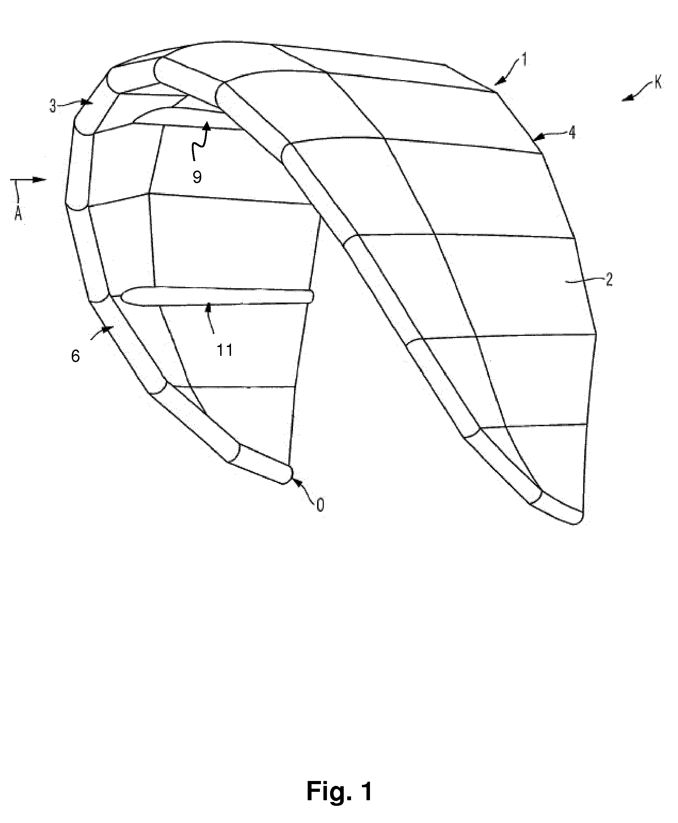

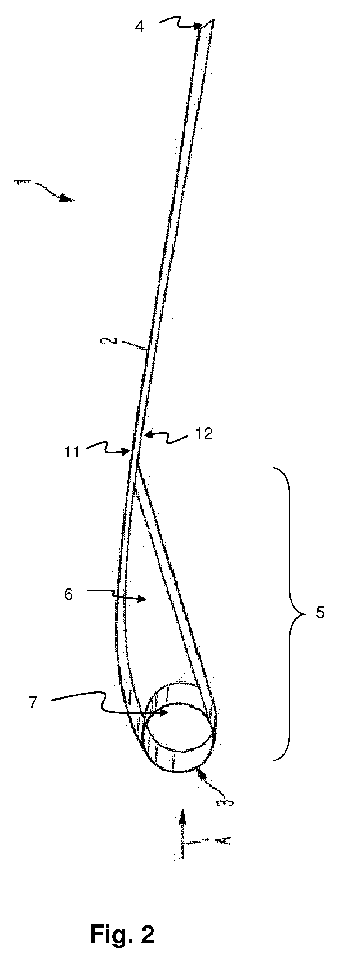

The Fig. 1 and Fig. 2 show a sail 1 and an LEI kite K having a sail 1 according to one exemplary embodiment of the invention. The sail 1 has a canopy 2 which is made of a suitable material, preferably a synthetic material, preferably a ripstop fabric such as polyester ripstop, for example. The canopy 2 has a leading edge 3 which preferably extends along the entire front edge of the canopy 2, here shown as flow A. In addition, the canopy 2 has a trailing edge 4 which extends along the entire rear edge of the canopy 2. The canopy 2 extends between the leading edge 3 and the trailing edge 4.

Furthermore, the sail 1 comprises a tube system T. The tube system T has a front tube 5 which extends along the leading edge 3, preferably along the entire leading edge 3. The front tube 5 according to the invention is built by an inflatable hose 7 (not shown in Fig. 1) that is disposed in a front chamber 6 of said canopy 2.

In addition, the tube system T has at least one transverse tube, hereinafter referred to as strut 9 (in FIG. 1, four struts 9, one of which is schematically illustrated) which extends between the leading edge 3 and the trailing edge 4, preferably essentially over the entire extent or length between the leading edge 3 and the trailing edge 4, and at an angle, preferably essentially perpendicularly, with respect to the front tube 5. Each strut 9 according to the invention is also built by an inflatable strut-hose 10 (not shown in Fig. 1) that is disposed in a strut-chamber 11 of said canopy 2.

An aerodynamic profile of the sail 1 preferably results by tensioning the canopy 2 over the tube system T that is built by the front tube 5 and/or the at least one strut 9.

The hose 7 as well as the at least one strut-hose 10 according to the invention have a dimensionally stable body or are designed as dimensionally stable bodies. For this purpose, the hose 7 and/or the strut-hose 10 are particularly preferably provided as inflatable bodies with reduced diameters and filled with compressed air of higher pressure compared to conventional bladders in the tube system T. However, it is also conceivable for the hose 7 ad/or the strut-hose 10 to be designed as (porous) foam bodies. As a result, the tube system T built by the front tube 5 and the at least one strut 9 advantageously forms an essentially dimensionally stable floating body which supports the sail in the water at the water surface. The front tube 5 and the at least one transverse tube 6 may either be provided separately or connected to one another, preferably integrally formed.

The front chamber 6 in which the inflatable hose 7 is located extends along the leading edge 3 of the canopy 2 over part, or preferably all, of the leading edge 3. The chamber 6 may also be referred to as the "front chamber" or "hose chamber" due to its function of receiving the hose 7 that is disposed therein. The chamber 6 as well as the inflatable hose 7 in the chamber 6 extend along at least part, but preferably along all, of the leading edge 3. The chamber 6 may be integrally formed with the canopy 2. For this purpose, the canopy 2 or the canopy material is turned down along the leading edge 3, i.e., preferably turned downwardly by 180°, and with the end which then faces the trailing edge 4 is in turn fastened to the bottom of the canopy 2 so that the resulting cavity forms the chamber 6, which is shown in Fig. 2. The area extending from the leading edge 3 beneath the canopy 2 to the rear toward the trailing edge 4 is also referred to as the lower sail 120, and the upper area of the canopy 2 is referred to as the upper sail 110.

Alternatively, the chamber 6 (likewise having a lower sail 120 and an upper sail 110) may also be provided separately and be fastened to the canopy 2 along the leading edge 3.

The inventive front tube 5 that is built by the hose 7 and the chamber 6 is advantageous compared to an conventional design of the tube system T, in particular due to the fact that a less costly material (Dacron®, for example) having preferred canopy properties (for example, increased dimensional stability for producing a curvature of the sail 1 via the chamber 6 and the conventional bladder 8) may then be provided for the canopy 2. In fact, the defined curvature of the front tube 5 is now achieved by a predefined curvature of the dimensionally stable hose 7 which decreases the material requirements for weight and robustness of chamber materials of conventional kites. At least 80 percent of the curvature is now obtained by the precurved hose 7 itself, wherein the remaining 20 percent are obtained by the bridles.

For accommodating the hose 7 in said chamber 6, the chamber 6 forms an aerodynamic, preferably droplet-shaped, profile, at least when the canopy 2 is stretched out, which, as is apparent in FIG. 2, tapers from the leading edge 3 toward the trailing edge 4. As mentioned above, the form of the leading edge 3 is not achieved by the chamber material or the canopy material. This relaxes the material requirements of the canopy material or the chamber material enormously and allows the necessary seams to be weaker compared to seams of conventional kites. In fact, the used material for the canopy 2 and/or the chamber 6 is now much lighter which decreases the weight of the overall kite K and increases the flight-properties of the kite K.

In order to provide the chamber 6, i.e., the aerodynamically advantageous, preferably droplet-shaped, profile, in a stable and non-flapping manner, in particular regardless of an angle of attack of the sail, the hose 7 might be a least partly movably fixed in the chamber 6. Thus, the hose 7 is not permanently connected to the canopy 2 compared to conventional kites K; instead, according to the invention the hose 7 is situated within the chamber 6 in a at least partly freely movable manner. Since the hose 7 is thus optimally positioned within the chamber 6 regardless of the angle of attack an aerodynamically advantageous profile at the leading edge 3 is achieved, in particular when the chamber 6 is or becomes tensioned over the hose 7.

Within the scope of the invention, "free movability" of the hose 7 in the chamber 6 is understood in particular to mean that the hose 7 is situated within the chamber 6 at least in a direction transverse to the longitudinal extent of the chamber 7, i.e., in the plane of the drawing in FIG. 2, for example, in a freely movable manner (i.e., not connected to the canopy 2 or the inner chamber wall), so that the chamber 6 may be easily tensioned over the hose 7. Due to the tensioning which is thus built up between the hose 7 and the chamber 6, it is preferably made possible for the chamber 6, more precisely, the upper sail 110 and lower sail 120 thereof, to form the aerodynamically advantageous profile, in particular an aerodynamic droplet shape, which herein is also referred to as "negative dihedral form". The term "negative dihedral form" herein refers to the arc of the kite if the kite is view in frot or back view, which is also known as "negative V" form. For this purpose, the hose 7 is preferably held in position within the chamber 6 by appropriate longitudinal and transverse tension, e.g. using tensioning devices 13 or at least retaining elements. The term "tension" is hereinafter similar to the term "retain". Since the dimensionally stable inflatable hose 7 is situated within the chamber 6 and relative to the inner chamber wall thereof in a at least particularly freely movable manner, the aerodynamically advantageous (droplet) profile at the leading edge 3 is continuously maintained, even when the angle of attack of the sail 1 changes, so that the chamber 6 maintains its advantageous profile as well as its dimensional stability, even at different angles of incidence. For this purpose, the hose 7 is preferably situated within the chamber 6 so that it is freely movable at least in one direction which is essentially perpendicular to the direction of flow A incident to the leading edge 3. The chamber 6 does not necessarily maintain a stable design since the disposed hose 7 maintains a stable design, regardless of the angle of attack and the angle of incidence, so that in particular an instable, flapping lower sail 12 is avoided.

The strut 9 may be detachably or non-detachably connected to the canopy 2. Sewing or gluing may preferably be considered as a non-detachable connection. For a detachable connection it is conceivable, for example, for the at least one strut 9 to be connected to the canopy 2 by means of loops, straps, Velcro fasteners, zippers, snap fasteners, or the like (not illustrated).

According to one alternative embodiment, the at least one strut 9, comparable to the arrangement of the front tube 5, may be accommodated, particularly preferably in a freely movable manner, in a strut-chamber 11 which preferably extends between the leading edge 3 and the trailing edge 4. The strut-chamber 11 may also be referred to as the "transverse chamber" or "transverse tube chamber" due to its function of receiving the transverse tube 9 disposed therein.

The at least one strut 9 and its strut-chamber 11 may be provided separately to the chamber 6 and its hose 7, i.e., spatially apart from one another, or may also be connected to one another. In particular for a design in which the chambers 6, 11 are connected to one another, the tube system T may be integrally formed. In this case, the tube system T is preferably initially inserted into the appropriate chambers 6, 11 via the struts 9 and fastened with appropriate holding means and the sail 1 is subsequently closed around the hose 7 in the area of the leading edge 3 in order to form the chamber 6.

The chamber 6 for accommodating the hose 7 and/or the strut-chamber 11 for accommodating the at least one strut 9, viewed in its/their direction of longitudinal extent, may have a closed cross section at least over a portion, or over all of its/their length (see the closed cross section of the chamber 6 for accommodating the hose 7 in FIG. 2). If the particular chamber 6, 11 has a closed cross section over its entire length, it has a one-piece design. However, it is also conceivable for the front chamber 6 to have multiple chamber sections along the leading edge 3, which in each case have a closed cross-section and which together are combined to form the corresponding chamber 6. Thus, the chamber 6 is segmented. The chamber sections may be present, for example, as the result of small openings, for example at their end facing the trailing edge 4 end with respect to the hose 7, or, viewed in the direction of longitudinal extent of the particular chamber 6 may be present at least partially or completely separate from one another (the latter also applies in particular for the chamber 11 of the strut(s) 9).

To allow or to simplify insertion and removal, i.e., replacement, of the hose 7 or the strut-hose 10 into and from the particular chamber 6, 11 the chamber 6, 11 in question may have at least one opening O through which the hose 7 or the at least one strut hose 10 is exchangeably inserted into the corresponding chamber 6, 11 The opening O may have a closable design and may be provided, for example, by means of a material element, composed of the canopy material, which is formed integrally with the canopy 2 or provided separately. For this purpose, the opening O may be provided, for example, by folding the chamber 6, 11 in question over at least part or all of its length. Alternatively or additionally, the opening O might comprise a zipper or Velcro fastener to be opened or closed. The opening O, viewed in the longitudinal extent of the corresponding chamber 6, 11 is particularly preferably provided at at least one or both ends of the chamber 6, 11 as also illustrated in FIG. 1. The hose 7 or the strut-hose 10 may be easily inserted into the chamber 6, 11 through these openings O, so that replacement of the hoses 7, 10 in question is easily possible.

The chamber 6 for accommodating the hose 7 and/or the chamber 11 for accommodating the at least one strut 9 may be formed, at least in part, from a mesh-like or net-like material, or the material may have a corresponding mesh-like or net-like structure. In particular, the hose 7 preferably has, preferably only in partial areas, a corresponding mesh-like or net-like structure on the bottom side of the chamber 6, i.e., on the lower sail 120. Either an opening O in the chamber 6, 11 or the mentioned mesh-like or net-like structure thereof preferably ensures reliable drainage of water which penetrates into the chamber 6, 11 in question.

The present invention further relates to a kite K as illustrated in FIG. 1, for example. The kite K has the above described sail 1 according to the invention as well as control lines (not shown) and preferably safety lines (not shown), which in each case are connected to the sail 1 at the locations correspondingly provided for this purpose. A so-called kite bar which connects the rider to the kite K is mountable at the ends of the control lines, bridles and safety lines facing away from the sail 1.

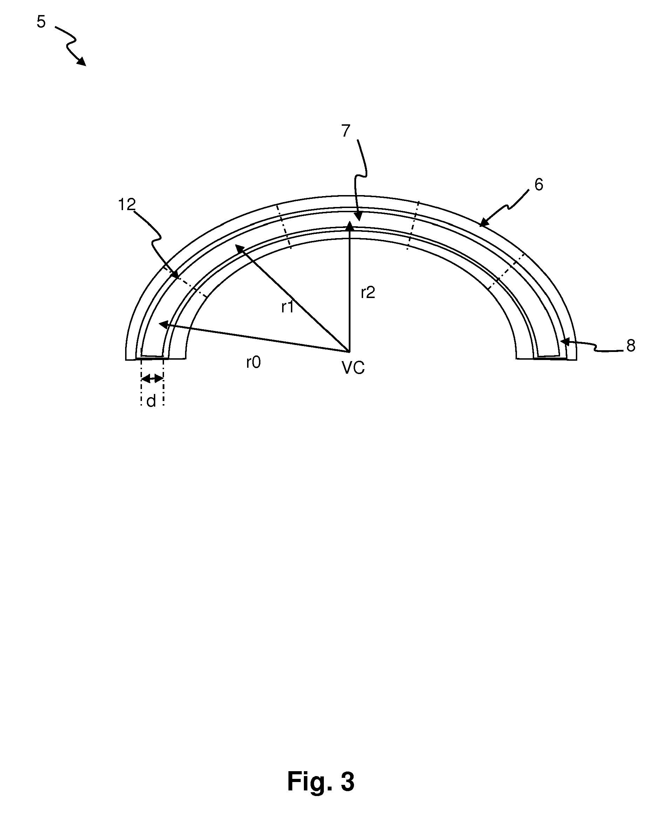

According to Fig. 3, a cross section of the inventive front tube 5 is shown. Herein a bladder 8 is housed in the hose 7 . The bladder 8 increases the air/gas impermeability so that the inflated hose 7 stays inflated in case the hose 7 comprises a small whole. The bladder 8 is thus a safety feature to guarantee the dimensionally stable form of the hose 7 when inflated. If the hose 7 is made by a woven material, the inner bladder 8 is the only air barrier. The inner bladder 8 can be fixed to the hose 7, for instance using a gluing material. Alternatively, the inner bladder 8 is arranged freely inside the hose 7 and can thus be exchanged easily. As can be seen from Fig. 3, the hose 7 comprises a plurality of predefined curvatures, which is demonstrated by different curvature radiuses r0, r1 and r2.

According to Fig. 3, the hose 7 is segmented into five hose segments. Each segment has an individual curvature r0, r1, r2 compared to a virtual center point VC. Thus, a plurality of predefined curvatures is provided for the inventive hose 7 which results in a flatter leading edge design. The hose 7 is preferably symmetrical so that the predefined curvatures of the respective outer hose-segments (r1, r2) of each side of the hose (7) are identical. Here, the middle hose-segment (r2) comprises a smaller curvature than the adjacent outer hose-segments (r1, r0), wherein the most outer hose-segments (r0) comprises the highest radius. It should be noted that the radius values and there segmentation is drawn as an example only and different arrangements of segmented hose-pieces to form the inventive inflatable hose 7 are not excluded from the invention.

The hose diameter d is preferably in the range of 60 Millimeters to 140 Millimeters for kites having a canopy in the range of 5 to 17 square meters, which is at least three times smaller than the tube diameter of conventional kites and thus allows a reduction of 1/3. This allows a smaller leading edge 3 which improves the flight conditions of the kite drastically.

Not shown in Fig. 3 but not excluded from the scope of the invention is an alternative embodiment of the inventive hose 7 which comprises several pieces, wherein each piece is connected to the adjacent hose-piece by an appropriate hose-connector 12, which will be explained hereinafter.

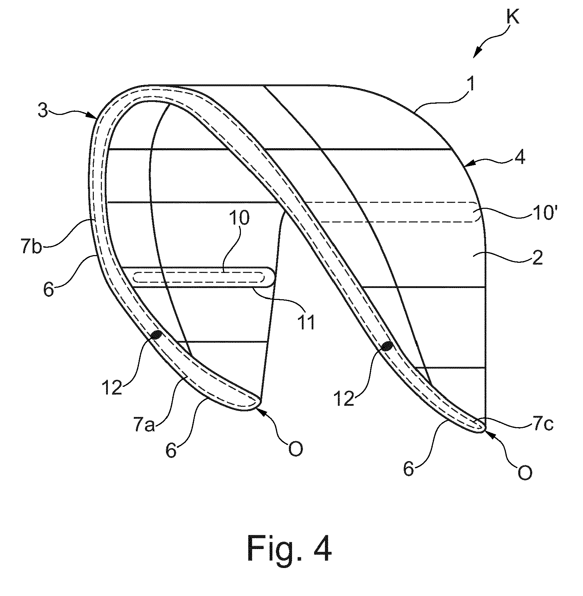

According to Fig. 4, another embodiment of an inventive sail 1 for an LEI kite K is shown. Only the differences between Fig. 1 and Fig. 4 will be highlighted below.

Here, the canopy 2 of the sail 1 comprises one front chamber 6 that extends along the leading edge 3 of the canopy 2. This chamber 6 accommodates the inflatable hose 7. According to Fig. 4, the hose 7 comprises three hose-pieces 7a, 7b, 7c. The middle hose 7b comprises a predefined curvature of a first curvature radius r. At each end of the middle hose piece 7b a hose-connector 12 is arranged. The hose connector 12 is suitable to connect two hose pieces together in a force-fitting and/or form-fitting manner. The hose connector 12 might be a sleeve or muffle having an inner diameter that is equal or slightly more than the hose-diameter d. Thus, at each end of the middle hose-piece 7b, another hose piece 7a, 7c is connectable. These additional hose pieces 7a, 7c, are identical to provide a mirror-symmetrical leading edge when viewed from flow A. The hose pieces 7a, 7c are located at wingtip ends of the canopy's leading edge 3 and have a predefined curvature that is different to the predefined curvature of the middle hose piece 7b. The difference in curvature is achieved by a different curvature direction. Preferably, only the direction in curvature of hose pieces 7a, 7c is different to the hose piece 7b and the curvature radius of each hose piece 7a, 7b, 7c is identical. Thus, the hose 7 can be machine-made and can be cut to obtain the individual pieces 7a, 7b and 7c. To obtain the leading edge 3 as shown in Fig. 4, each individual piece 7a, 7b, 7c is connected by a hose connector 12 and only comprises a different curvature direction. In another embodiment, also the curvature radiuses of the pieces 7a and 7c are different to the curvature radius of piece 7b.

Alternatively and not shown in Fig. 4 is an embodiment that also uses pieces of hoses 7a, 7b and 7c, wherein each piece 7a, 7b and 7c is disposed in a separate front-chamber segment 6a, 6b and 6c. Thus, the hose-connector 12 can be avoided. Each front chamber segment 6a, 6b and 6c might comprise an opening O for disposing and/or exchanging said inflatable hose piece 7a, 7b or 7c.

The additional hose pieces 7a and 7c are provided to obtain a swept kite shape of the leading edge 3 for improved flight properties and easier handling of the kite K.

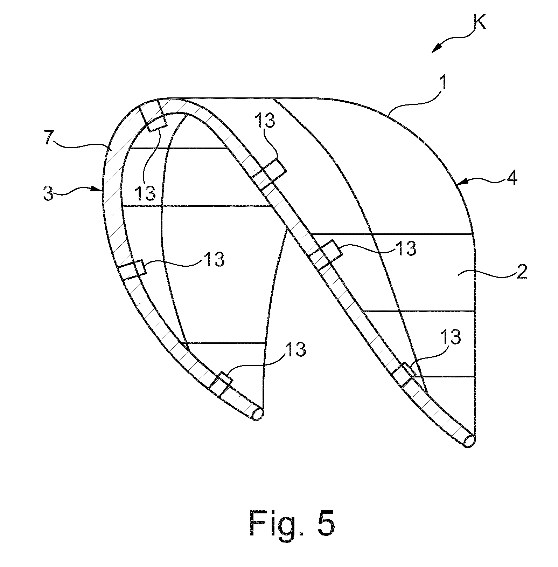

According to Fig. 5, another preferred embodiment of an inventive sail 1 for kites K is shown. In particular to provide the negative dihedral form of the sail 1, the canopy 2 according to Fig. 5 is preferably tensioned over the front tube 5 and/or the at least one strut 9. For this purpose, the sail 1 preferably has at least one retaining device 13 for retaining the canopy 2 at the hose 7. To this end, the hose 7 is preferably connected to the at least one retaining device 13 at at least one or both of its/their opposite ends, viewed in the longitudinal extent, which preferably protrude from the openings O.

However, it is also conceivable for the tensioning device 13 to be provided only at one end of the corresponding hose 7. It is also possible that retaining devices 13 are arranged in equidistant manner at the leading edge 3 of the canopy 3 to provide a sufficient tensioning of said hose 7 at the canopy 2. It is also possible that the retaining devices 13 are used in combination with the chamber 6 to further tensioning the hose 7. While at an opposite end of the retaining device 13, the chamber 6 has no opening or has a closable opening O, i.e., is closed or closable, so that, in addition to the retaining device 13 at only one end, the hose 7 is also supported on the closed chamber opening O at the other end. It is also conceivable that the sail 1, in addition to the retaining devices 13 which are connected to both ends or to one end of the corresponding hose 7 has further tensioning/retaining devices 13 for also connecting the corresponding hose 7 between these two end points. The use of tensioning devices 13 according to the above described manner is also applicable to the strut(s) 9.

The tensioning/retaining device(s) 13 is/are preferably designed as an (elastic) strap system which is preferably connected to the canopy 2 and selectively settable in a stepped or stepless manner.

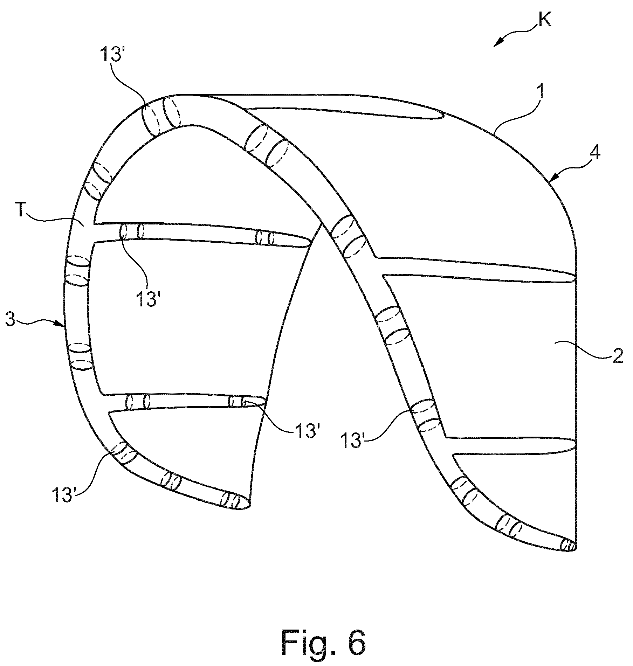

According to Fig. 6, another preferred embodiment of an inventive sail 1 for kites K is shown. In only contrast to Fig. 5, the tensioning elements 13 are built as loop straps 13' for tensioning the tube system T at the canopy 2. The tube system T according to Fig. 6 comprises the front tube and five struts 9. The front tube is built by the inventive hose 7. The front tube and the five struts 9 are connected in such a manner that only one valve is necessary to inflate the whole tube system T.

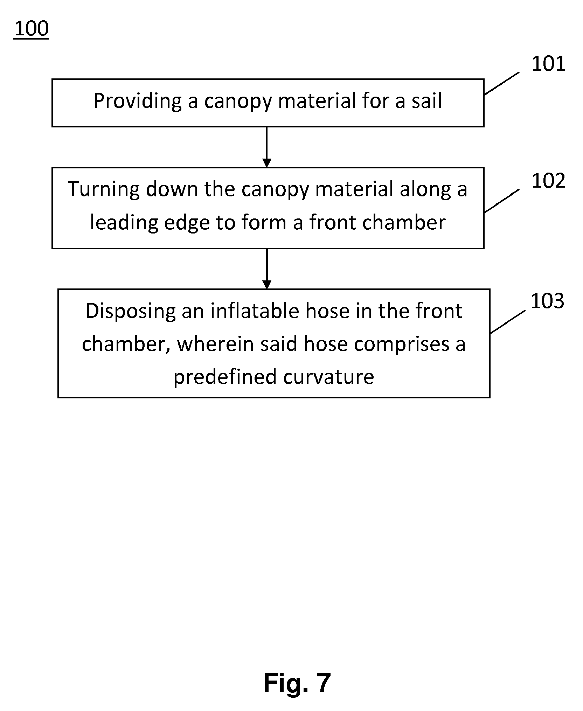

The canopy 2 of the sail 1 of the kite K does not necessarily comprise a front chamber 6 to tension the hose 7. According to Fig. 6, the tube system T is tensioned by a plurality of loop straps 13' that are preferably arranged in a pairwise manner. Alternatively, a front chamber 6 according to the previously described embodiments is used and the loop straps 13' are arranged inside the chamber 6 to tension the hose 7 and the strut-hoses 11. A method 100 for manufacturing a sail 1 for a kite K according to the invention is described below. A respective flow diagram of this method is shown in Fig. 7. According to step 101 a canopy material for forming a sail 1 is provided. In subsequent step 102, a turning down of said canopy material along a leading edge 3 of said canopy 2 of said sail 1 for integrally forming a front chamber 6 is suggested. Subsequently, in step 103, the disposing of an inflatable hose 7 in said front chamber 6 is suggested, wherein said hose 7 is inflated with compressed air or high pressure gas, so that said hose 7 in said front chamber forms a front tube 5 of said sail 1, wherein in said inflated state of said hose 7, said hose 7 being dimensionally stable for bringing said sail 1 in a negative dihedral form independent on a load condition of said sail 1, wherein said hose 7 comprises a predefined curvature, wherein said hose 7 being bent prior being disposed in said front chamber 6.

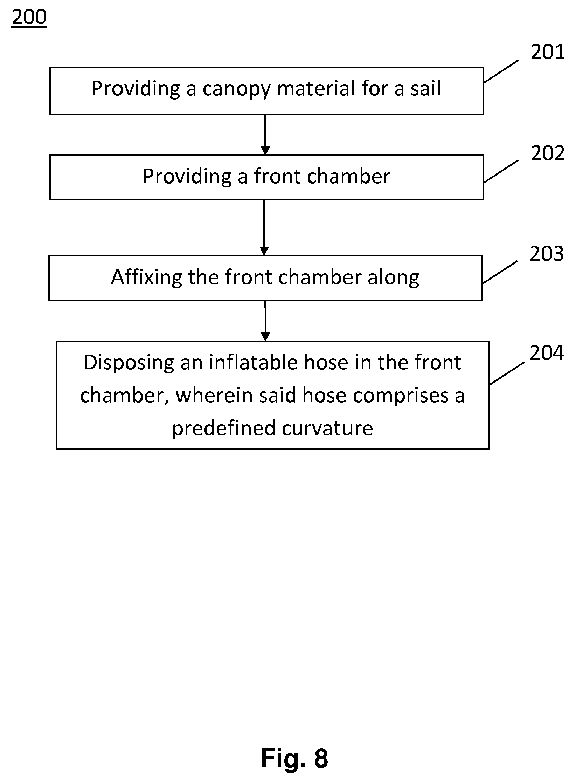

Another method 200 for manufacturing a sail 1 for a kite K according to the invention is described below. A respective flow diagram of this method is shown in Fig. 8. According to step 201 a canopy material for forming a sail 1 is provided. In subsequent step 202, a separately providing of a front chamber 6 along said leading edge 3 is suggested. In step 203 said front chamber 6 is affixed along said leading edge 3. Subsequently, in step 204, the disposing of an inflatable hose 7 in said front chamber 6 is suggested, wherein said hose 7 is inflated with compressed air or high pressure gas, so that said hose 7 in said front chamber forms a front tube 5 of said sail 1, wherein in said inflated state of said hose 7, said hose 7 being dimensionally stable for bringing said sail 1 in a negative dihedral form independent on a load condition of said sail 1, wherein said hose 7 comprises a predefined curvature, wherein said hose 7 being bent prior being disposed in said front chamber 6.

Preferably, the hose 7 is situated in a freely movable manner in the chamber 6 which extends along a leading edge 3 of the canopy 2, in which the hose 7 is inserted into the chamber 6, for example through lateral openings O in the chamber 6. The hose 6 might be inflated before inserting the hose 7 in the chamber 6 for easier handling. Alternatively, the hose 7 is inserted in deflated state and is inflated after its disposal in the chamber 6. The openings O in question are then closed, or the hose 7 is tensioned to the canopy 2 by means of some other tensioning devices 13. In a further step, at least one strut 9 is provided on the canopy 2 in such a way that the strut 9 extends between the leading edge 3 and a trailing edge 4 which includes the canopy 2 together with the leading edge 3.

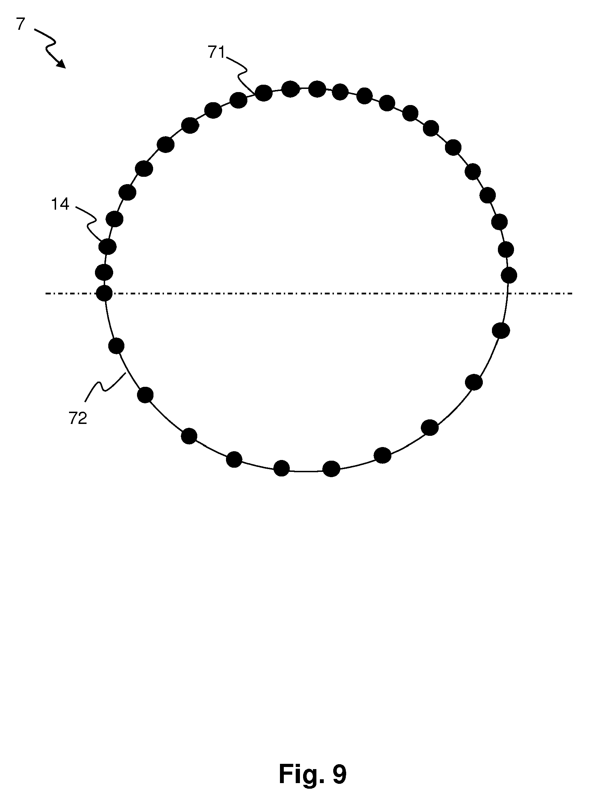

In Fig. 9 an inflatable hose 7 with predefined curvature according to the invention is shown in cross section. The inflatable hose 7 is preferably machine-made and is achieved as mass product. To obtain a precise predefined curvature of said hose 7, the opposite surfaces 71, 72 of the hose 7 are built in different manner.

For instance, the hose 7 is built by weaving yarn material with a circular weaving machine. In weaving techniques, the warp yarns 14 are the lengthwise yarns that are held in tension on a frame or loom. The yarn that is inserted over-and-under the warp yarns 14 is called the weft yarn (not shown in Fig. 9). The warp yarn 14 is held under high tension during the entire process of weaving and warp yarn 14 must be strong. According to Fig. 9, the first surface 71 comprises a different number of warp yarn 14 than the second surface 72 of the hose 7.

It should be noted that Fig. 9 is an illustration only and a lot more yarns are needed to provide an air impermeable hose 7. Here, the number of warp yarn 14 of the first surface 71 is as double as high as the number of warp yarn 14 of the second surface 72 of said hose. As a conclusion, when inflated, the surface 72 of the hose 7 is weaker than the first surface 71 and so, the hose 7 is bent to the first surface 71. The predefined curvature radius can be adjusted by the number of warp yarn per surface 71, 72 in a very precise manner which leads to the predefined curvature of the hose 7. At least 80 percent of the curvature of the leading edge 3 of the sail 1 is thus achieved by the hose 7. The hose 7 might use polyester yarn.

Alternatively, the warp yarn material of the first surface 71 is different to the warp yarn material of the second surface 72 of the hose 7 to achieve the predefined curvature of the hose in a precise manner.

Alternatively, the hose 7 is built from a synthetic material and is formed by an extruding machine. Using different materials of synthetics for each surface 71, 72 and connecting both surface 71, 72 (e.g. welding, clueing or the like) would also lead to a predefined curvature of the hose 7 when inflated. Alternatively and/or additionally, the extrusion process can also provide a different thickness of materials in surface 71 and 72, resulting in different elongation character of the surfaces 71, 72, which leads to the curved hose 7.

Using the inventive inflatable hose 7 with a predefined curvature and placed in a chamber 6 to construct an LEI kite K leads to less material requirements of the chamber material. In fact, the chamber material can be much lighter since it does not necessarily bend the bladder 8 and can thus be less stable. Also the seams for building the chamber 6 can now be less strong.

Such an inventive solution allows an easy replacement of the tube system T from the canopy 2 of the sail 1. Thus, a canopy 2 can now be provided with different tube systems T which increases flexibility and reduces repair-costs if the kite K is damaged. It is possible to provide four different hoses 7 having different hose diameters r and three different strut-hoses 10 having different strut diameters. With these four differently formed hoses 7 and three different strut-hoses 10 it will now be possible to equip existing canopy sizes from 5 square-meters to 17 square-meters in an enormous flexible manner. In case one hose 7 is damaged, it can easily be replaced. The manufacturing of different kite sizes is now much easier since equalized hoses 7, 10 are used. Thus, the tube system T is much more flexible in use and it is possible to equip different kites K with equal tube system parts.

The present invention is not limited to the above-mentioned exemplary embodiments provided that it is encompassed by the subject matter of the appended claims. In particular, the invention is not limited to specific materials or sail surfaces.

Thus, all features of all embodiments described, shown and/or claimed herein can be combined with each.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

### REFERENCE SIGNS

- 1: Sail
110 Upper sail
120 Lower sail
- 2: Canopy
- 3: Leading Edge
- 4: Trailing Edge
- 5: Front Tube
- 6: Front Chamber
- 7: Hose
71 First Surface of Hose
72 Second Surface of Hose
- 8: Bladder
- 9: Strut
- 10: Strut-hose
- 11: Strut-chamber
- 12: Hose Connector
- 13: Tensioning Device/Retaining Element
- 14: Warp Yarn
- T: Tube System
- K: Kite
- O: Opening
- A: Flow
- d: Hose Diameter
- r: Curvature Radius
- VC: Virtual Center
- 101 ... 204: Method steps

## Claims

1. A sail (1) for a kite comprising:
a canopy (2) having a leading edge (3) and a trailing edge (4);
a front chamber (6) extending along said leading edge (3); and
an inflatable hose (7) disposed in said front chamber (6);
wherein said hose (7) being inflated with a compressed fluid, so that said hose (7) in said front chamber (6) is forming a front tube (5) of said sail (1);
wherein in said inflated state of said hose (7), said hose (7) being dimensionally stable for bringing said sail (1) in a negative dihedral form independent on a load condition of said sail (1); and
wherein said hose (7) comprises a predefined curvature in its longitudinal alignment prior its disposal in said front chamber (6).

2. The sail (1) according to claim 1,
wherein a bladder (8) is arranged in said hose (7); and
wherein both the hose (7) and the bladder (8) are disposed in said front chamber (6).

3. The sail (1) according to one of the previous claims,
wherein said sail (1) comprising a tube system including said front tube (5) and at least one strut (9) extending between said leading edge (3) and said trailing edge (4); and
wherein said at least one strut (9) being built with a strut-hose (10) disposed in a strut-chamber (11).

4. The sail (1) according to one of the previous claims,
wherein said predefined curvature of said hose (7) comprising a curvature radius being up to 50 percent higher than a radius of said sail (1).

5. The sail (1) according to one of the previous claims,
wherein said hose (7) in said inflated state being circumferentially homogeneous, preferably comprising a diameter in the cross section in the range of 60 Millimeter to 140 Millimeter, more preferably in the range of 80 Millimeter to 100 Millimeter.

6. The sail (1) according to one of the previous claims, wherein said front chamber (6) comprising at least one opening for exchanging said hose (7), preferably at at least one extended end of said front chamber (6).

7. The sail (1) according to one of the previous claims,
wherein said hose (7) and/or said at least one strut-hose (10) in each case is/are connected at at least one or both of its/their opposite ends, viewed in the longitudinal extent, by means of a tensioning device (13) for tensioning said hose (7) in said front chamber (6) and/or for tensioning said at least one strut-hose (10) in said appropriate strut-chamber (11).

8. The sail (1) according to one of the previous claims,
wherein said hose (7) comprising at least two additional predefined curvatures, one of each being located at an end of said leading edge (3); and
wherein said additional predefined curvatures being directed in opposite direction to said predefined curvature.

9. The sail (1) according to one of the previous claims,
wherein said hose (7) comprises at least three segments,
wherein each segment of said hose (7) comprises a predefined curvature.

10. The sail (1) according to claim 9, wherein the segments are connected together by hose connectors.

11. The sail (1) according to claim 9, wherein each segment is disposed in a separate front chamber segment.

12. The sail (1) according to one of the previous claims,
wherein said hose (7) comprising a first surface (71) and a second surface (72) being arranged opposite to said first surface (71);
wherein an amount of warp yarns of said first surface (71) is different to an amount of warp yarns of said second surface (72) for predefining said curvature.

13. The sail (1) according to claim 12,
wherein said hose (7) comprising a first surface (71) and a second surface (72) being arranged opposite to said first surface (71);
wherein warp yarns of said first surface (71) are different to warp yarns of said second surface (72) for predefining said curvature.

14. A kite comprising a sail according to one of the previous claims, further comprising steering lines and front lines, wherein said steering lines and said front lines are removable connected to said sail (1) for controlling said kite.

15. A method for manufacturing a sail (1) according to one of the claims 1 to 13, the method comprising the following steps:
providing (101, 201) a canopy material for forming said sail (1);
turning down (102) said canopy material along a leading edge (3) of said canopy (2) of said sail (1) for integrally forming a front chamber (6) or separately providing (202) a front chamber (6) along said leading edge (3) and affixing (203) said front chamber (6) along said leading edge (3); and
disposing (103, 204) an inflatable hose (7) in said front chamber (6),
wherein said hose (7) being inflated with compressed air or high pressure gas, so that said hose (7) in said front chamber (6) is forming a front tube (5) of said sail (1);
wherein in said inflated state of said hose (7), said hose (7) being dimensionally stable for bringing said sail (1) in a negative dihedral form independent on a load condition of said sail (1); and
wherein said hose (7) comprises a predefined curvature, wherein said hose (7) being bent prior being disposed in said front chamber (6).
